# EUROPÄISCHE PATENTANMELDUNG

(11) **EP 0 758 837 A2**
(43) Veröffentlichungstag der Anmeldung: **19.02.1997**
(21) Anmeldenummer: 96112958.2
(22) Anmeldetag: 12.08.1996
(51) Int. Cl.: H05B 37/03

(54) **Verfahren und Einrichtung zur zentralen Überwachung der Funktion von parallel geschalteten elektrischen Verbrauchern an einem Wechselspannungsnetz**

(30) Priorität: 12.08.1995 DE 19529751
(71) Anmelder: CEAG Sicherheitstechnik GmbH, 59494 Soest (DE)
(72) Erfinder: Prasuhn, Jürgen, Dipl.-Ing., 59494 Soest (DE)
(74) Vertreter: Grünecker, Kinkeldey, Stockmair & Schwanhäusser Anwaltssozietät

(57) **Zusammenfassung**

Die Erfindung bezieht sich auf ein Verfahren zur zentralen Überwachung der Funktion von elektrischen Verbrauchern (3.1, 3.2,...), die durch Versorgungsleitungen L', N' parallel geschaltet sind und unter Zwischenschaltung einer zentralen Überwachungseinrichtung (1) mit einem Wechselspannungsnetz verbunden sind. Die zentrale Überwachungseinrichtung (1) startet eine Abfrage von Verbraucherzuständen durch eine kurzzeitige Unterbrechung des Netzstromes. Die Unterbrechung wird im Überwachungsmodul (2) detektiert, das den Verbrauchern (3.1, 3.2,...) jeweils zugeordnet ist. Nach einer verbraucherspezifischen Verzögerungszeit T_{N1}, T_{N2},... erfolgt eine Statusmeldung durch wenigsten einen Stromimpuls I, der durch kurzzeitige zusätzliche Belastung der Versorgungsleitungen L', N' von den Überwachungsmodulen (2) erzeugt wird. Das Verfahren ist beispielsweise anwendbar zur Überwachung einer Notbeleuchtungsanlage.

## Beschreibung

Die Erfindung bezieht sich auf ein Verfahren zur zentralen Überwachung der Funktion von parallel geschalteten elektrischen Verbrauchern an einem Wechselspannungsnetz, sowie auf eine Einrichtung zur Durchführung des Verfahrens.

Das Verfahren ist zur Überwachung beliebiger elektrischer Verbraucher geeignet, die aus irgendwelchen Gründen, z. B. sicherheitstechnischen Gründen, überwacht werden sollen. Eine typische Anwendung ist die zentrale Überwachung von Notbeleuchtungseinrichtungen, wobei Leuchtmittel, z. B. Glühlampen, Leuchtstofflampen mit elektronischem Vorschaltgerät oder konventionellem Vorschaltgerät, Halogenlampen oder Quecksilberdampflampen zentral zu überwachen sind.

Funktionsüberwachung kann bedeuten, daß die Funktionsfähigkeit oder der Einschaltzustand oder beides am Verbraucherort festgestellt wird und als Meldesignal zu einer zentralen Überwachungseinrichtung zu übertragen sind.

Zur Übertragung der Zustandsmeldung sind mehrere Verfahren bekannt, die einen zu den Stromversorgungsleitungen zusätzlichen Datenübertragungsweg erfordern, z. B. in Form wenigstens einer zusätzlichen Datenleitung, mittels Funk oder mittels Infrarotlicht. Diese Verfahren haben unterschiedliche Vor- und Nachteile, gemeinsames Merkmal ist jedoch ein erheblicher Zusatzaufwand für die Informationsübertragung.

Aus der EP 04 58 155 B1 ist ein Verfahren gemäß dem Oberbegriff des Anspruchs 1 bekannt. Bei diesem Verfahren werden die Versorgungsleitungen verwendet zur Übertragung eines Abfragesignals von einer zentralen Überwachung zu den einzelnen Verbrauchern, sowie für die umgekehrte Übertragungsrichtung von den Verbrauchern zur zentralen Überwachungseinrichtung. Die Verbraucher melden das Ergebnis eines Funktionstests in Form eines Stromimpulses. Beim bekannten Verfahren wird zur Nachrichtenübertragung ein hochfrequentes Trägersignal benutzt, dem zur Abfrage der Verbraucher tonfrequente Impulse als codierte Adresse aufmoduliert werden. Die Verbraucher belasten mit Hilfe eines Widerstandes das hochfrequente Trägersignal, um einen detektierbaren Stromimpuls auf dem Trägersignal zu erzeugen. Das Verfahren hat sich an sich bewährt, erfordert jedoch relativ hohe Kosten für die Hochfrequenzeinrichtungen. Außerdem können in bestimmten Anwendungsfällen Störungen dadurch auftreten, daß das Hochfrequenzsignal beispielsweise durch Entstörkondensatoren in Verbrauchereinrichtungen gedämpft wird oder eine Beeinflussung durch andere Überwachungs- und Steuerungssysteme eintritt.

Der Erfindung liegt die Aufgabe zugrunde, ein noch weiter vereinfachtes Verfahren zur zentralen Überwachung von Verbrauchern an einem Wechselspannungsnetz anzugeben. Außerdem soll eine Einrichtung zur Durchführung des Verfahrens angegeben werden.

Diese Aufgabe wird bei einem Verfahren zur zentralen Überwachung der Funktion von parallel geschalteten elektrischen Verbrauchern an einem Wechselspannungsnetz gemäß dem Oberbegriff des Anspruchs 1 durch dessen kennzeichnende Merkmale gelöst. Ausgestaltungen des Verfahrens sowie eine Einrichtung zur Durchführung des Verfahrens sind in weiteren Ansprüchen angegeben.

Mit dem erfindungsgemäßen Verfahren wird insbesondere dadurch eine Vereinfachung erzielt, daß kein hochfrequentes Trägersignal erforderlich ist.

Das Verfahren sowie eine Einrichtung zur Durchführung des Verfahrens werden nachstehend von in den Zeichnungsfiguren dargestellten Ausführungsbeispielen erläutert.

Es zeigt
- Fig. 1: eine Anordnung parallel geschalteter Verbraucher an einem Wechselspannungsnetz, denen jeweils ein Überwachungsmodul zugeordnet ist zur Übertragung von Funktionsmeldungen an eine zentrale Überwachungseinrichtung,
- Fig. 2: Einzelheiten der zentralen Überwachungseinrichtung,
- Fig. 3: Einzelheiten eines Überwachungsmoduls, und
- Fig. 4: eine Darstellung von Informationsimpulsen.

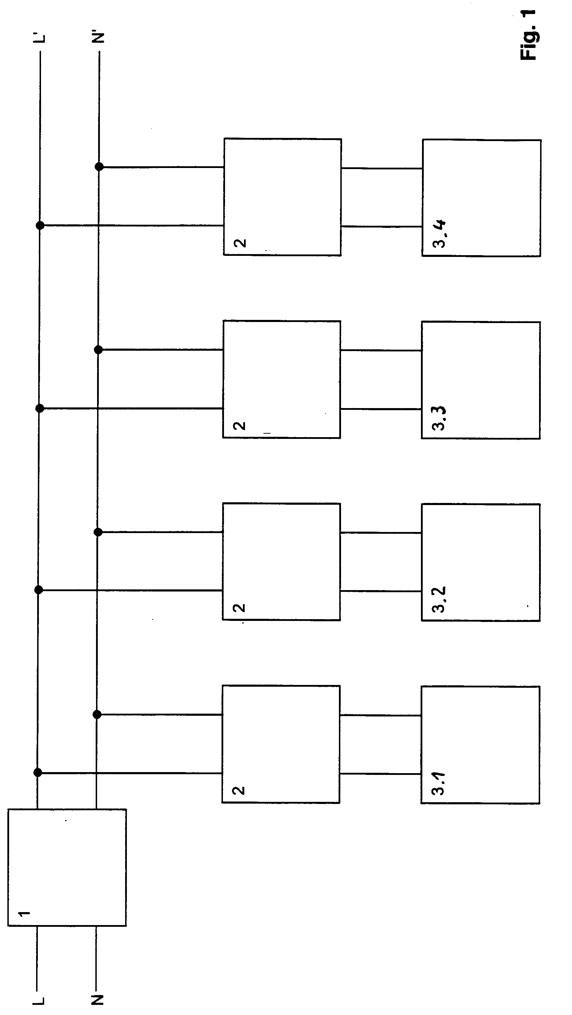

Fig. 1 zeigt eine Gesamtanordnung, bei der eine zentrale Überwachungseinrichtung 1 eingangsseitig über Netzleitungen L, N mit einem Wechselspannungsnetz verbunden ist. Ausgangsseitig sind an die zentralen Überwachungseinrichtung 1 über Versorgungsleitungen L', N' mehrere Verbraucher 3.1, 3.2,... jeweils unter Zwischenschaltung eines Überwachungsmoduls 2 anschließbar.

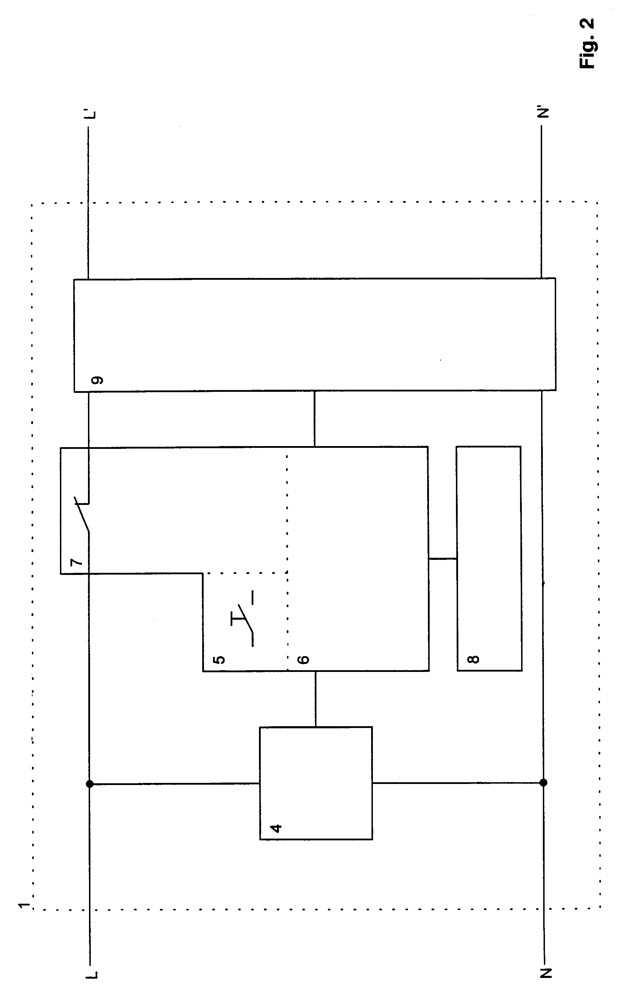

Fig. 2 zeigt ein Blockschaltbild der zentralen Überwachungseinrichtung 1. Sie enthält ein Stromversorgungsteil 4 zur Speisung der übrigen Baugruppen, nämlich eines Bedienfelds 5 mit Prüftaster, eines Steuerteils 6, einer Schalteinrichtung 7, einer Anzeigeeinrichtung 8 und eines Sensors 9. Die beispielhaft dargestellte zentrale Überwachungseinrichtung ist eingerichtet zum Auslösen eines Abfragezyklusses durch Betätigen des Prüftasters im Bedienfeld 5 und zur Anzeige von Meldungen in der Anzeigeeinrichtung 8, die z. B. eine Flüssigkristallanzeige oder eine Anordnung von Leuchtdioden enthalten kann. Die zentrale Überwachungseinrichtung 1 kann jedoch auch mit einer übergeordneten Leiteinrichtung in Verbindung stehen, von der aus ein Funktionstest veranlaßt wird und in der Rückmeldungen erfaßt werden. Die Schalteinrichtung 7 dient zum kurzzeitigen Unterbrechen der Netzspannung und wird vom Steuerteil 6 angesteuert. Der Stromsensor 9 ist eingerichtet zur Erkennung von Stromimpulsen auf den Versorgungsleitungen L', N', beispielsweise mit Hilfe eines Shunts, eines Hallsensors oder eines Stromwandlers.

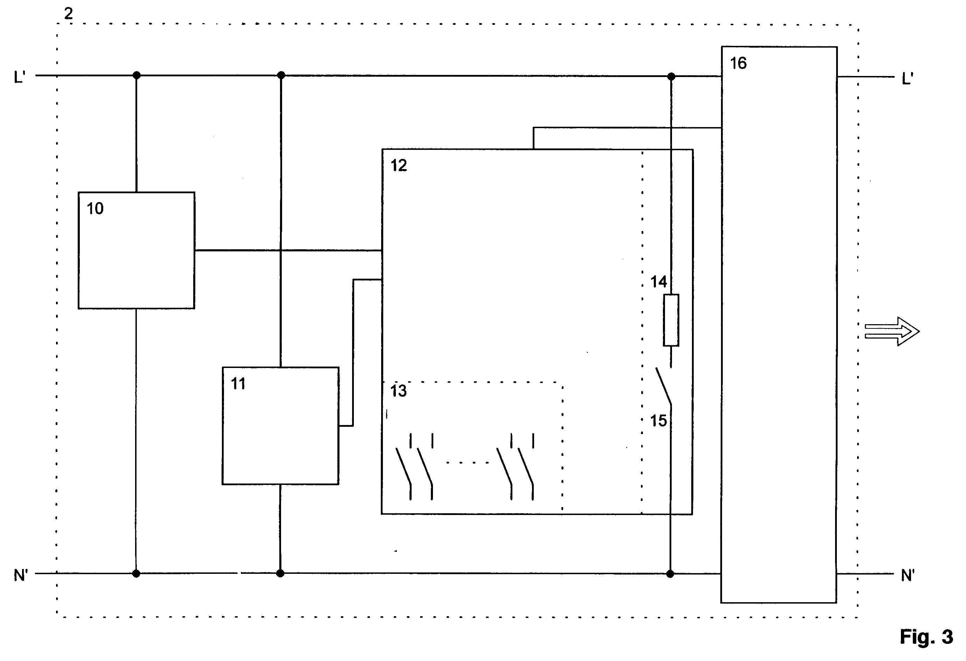

Fig. 3 zeigt das Blockschaltbild eines Überwachungsmoduls 2. Das Modul 2 enthält eine Spannungsversorgungseinrichtung 10 für eine Steuerelektronik 12. Eine Spannungsüberwachungseinrichtung 11 kann Spannungsunterbrechungen auf den Versorgungsleitungen L', N' detektieren und meldet eine Spannungsunterbrechung an die Steuerelektronik 12. In der Steuerelektronik 12 ist ein Codierschalter 13 zur Einstellung einer Verbraucheradresse vorhanden. Die Steuerelektronik steuert eine Schalteinrichtung 15, z. B. einen Transistor an, der eine Belastungseinheit 4, z. B. einen Widerstand oder Kaltleiter parallel zu den Versorgungsleitungen L', N' schaltet. Eine Stromüberwachungseinrichtung 16 im Überwachungsmodul 2 führt eine Analyse des fließenden Laststromes hinsichtlich oberer und unterer Grenzen durch und detektiert Stromimpulse.

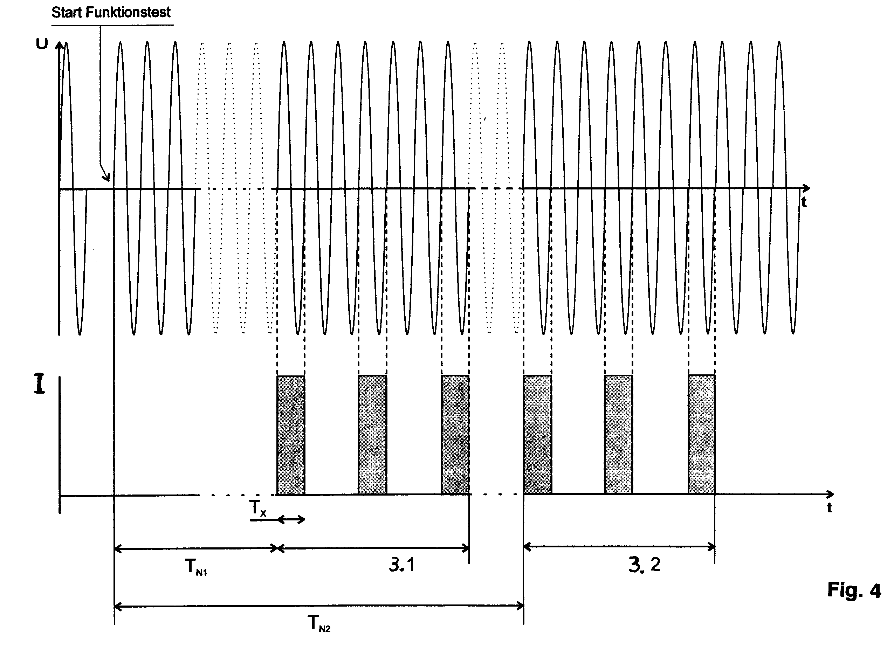

Die Arbeitsweise der in den Figuren 1 - 3 dargestellten Einrichtung wird anhand von Fig. 4 nachstehend erläutert. Eine Abfrage von Funktionsmeldungen wird in der zentralen Überwachungseinrichtung 1 durch Betätigen des Prüftasters im Bedienfeld 5 ausgelöst. Das Steuerteil 6 veranlaßt mit Hilfe der Schalteinrichtung 7 eine kurzzeitige Unterbrechung des gesamten Laststromes. Diese Situation ist in Fig. 4 links oben dargestellt, wo am Ende einer Periode der Netzspannung, z. B. einer 50 Hz-Spannung eine Unterbrechung gezeigt ist, die jeweils von den Spannungsüberwachungseinrichtungen 11 in den Überwachungsmodulen 2 detektiert wird und jeweils einen Funktionstest auslöst. Die Dauer der zu detektierenden Spannungsunterbrechung sollte mindestens 20ms betragen, damit die Überwachungsmodule nicht bei einem kurzen Störimpuls einen Funktionstest einleiten. In der Steuerelektronik 12 der Überwachungsmodule 2 wird in Abhängigkeit von der eingestellten Adresse eine unterschiedliche Verzögerungsdauer T_{N1}, T_{N2}, ... gestartet, nach deren Ablauf jeweils die Verbraucher 3.1, 3.2,... wenigstens einen Stromimpuls I während einer Impulsdauer Tₓ senden. Die Impulsdauer Tₓ kann beispielsweise mit einer Periode der Netzspannung übereinstimmen und auch mit der Netzspannung synchronisiert sein, wie in Fig. 4 dargestellt ist. Im Beispiel gemäß Fig. 4 wird zur Statusmeldung ein Impulspaket mit maximal drei Einzelimpulsen verwendet. Dadurch können pro Verbraucher 3-Bit-Informationen zur zentralen Überwachungseinrichtung 1 übertragen werden, so daß sieben verschiedenen Statusinformationen unterscheidbar sind.

Die von den Überwachungsmodulen 2 der Verbraucher 3.1, 3.2,... erzeugten Stromimpulse I werden vom Stromsensor 9 der zentralen Überwachungseinrichtung 1 detektiert und deren Steuerteil 6 gemeldet. Die zentrale Überwachungseinrichtung 1 ordnet die Stromimpulse entsprechend ihrer Verzögerungsdauer einer der gespeicherten Adressen zu, decodiert die Impulse und steuert die Anzeigeeinrichtung 8 an.

Die Höhe des Antwort-Stromimpulses I ist hauptsächlich von der Empfindlichkeit der Auswerte-Elektronik abhängig, sollte aber in der Größenordnung 0,5.... 1A liegen, um gegenüber Störsignalen einen ausreichenden Abstand zu gewährleisten. Grundsätzlich sollte der Betrag des Stromimpulses I einen ausreichenden Hub gegenüber dem Laststrom haben.

Die verfahrensgemäß übertragbaren unterschiedlichen Statusinformationen werden von Verbrauchern mit sogenannter Eigenintelligenz bereitgestellt. Es versteht sich, daß in Verbrauchern mit Eigenintelligenz wenigstens Teile der Funktionen der Überwachungsmodule 2 integriert sein können.

Im Fall einer Einzelbatterienotleuchte als Verbraucher wären mit 3-Bit-codierten Stromimpulsen Meldungen wie 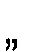 Ladestörung", 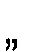 Lampenstörung", 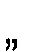 Funktionstest nicht bestanden", 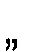 Betriebsdauertest nicht bestanden", 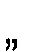 Übertragungsstörung" oder 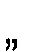 Leuchte in Ordnung" übertragbar.

Ein anderes Beispiel wäre die Überwachung von Niedervolt-Halogenlampen, bei denen durch Ausfall des Leuchtmittels oder des Transformators der aufgenommene Strom einen vorgegebenen programmierbaren Grenzwert unterschreitet. In diesem Fall würde das Überwachungsmodul nach der Verzögerungsdauer T_{N} keinen Stromimpuls generieren und damit der Überwachungseinrichtung 1 einen Fehler melden. Bei intakter Leuchte würde nach der Verzögerungsdauer T_{N} ein Stromimpuls den fehlerfreien Zustand signalisieren. In diesem Beispiel kann also ein Stromimpuls pro Überwachungsmodul 2 ausreichen, um den Betriebsstatus des Verbrauchers zu beschreiben.

Es ist zweckmäßig, für die Meldungen der einzelnen Verbraucher ein festes Zeitraster von z. B. 5 Sekunden vorzusehen, wobei der Beginn von Impulsdauern Tₓ sowie auch der Pausen zwischen den Impulsen vorteilhaft mit Null-Durchgängen der Netzspannung oder des Verbraucherstroms synchronisiert werden.

Die zum Start eines Abfragezyklusses erforderliche kurze Spannungsunterbrechung stört den Betrieb eines elektrischen Verbrauchers im allgemeinen nicht. Im Fall von Leuchten als Verbraucher bleibt eine Spannungsunterbrechung von weniger als 150ms an der Leuchte unsichtbar. Bei Einzelbatterie-Notleuchten würde eine Umschaltung auf Batteriebetrieb erst nach einer Unterbrechung von mehr als 0,5s bis 1s eingeleitet werden.

### Bezugszeichenliste

- 1: zentrale Überwachungseinrichtung
- 2: Überwachungsmodul
- 3: Elektrischer Verbraucher
- 4: Stromversorgungsteil
- 5: Bedienteil mit Prüftaster
- 6: Steuerteil
- 7: Schalteinrichtung
- 8: Anzeigeeinrichtung
- 9: Stromsensor
- 10: Spannungsversorgungseinrichtung
- 11: Spannungsüberwachungseinrichtung
- 12: Steuerelektronik
- 13: Adressen-Codierschalter
- 14: Belastungseinheit
- 15: Schalteinrichtung
- 16: Stromüberwachungseinrichtung
- L, N: Netzleitungen
- L', N': Versorgungsleitungen
- I: Stromimpuls,
- Tₓ: Impulsdauer
- T_{N1}, T_{N2}: verbraucherspezifische Verzögerungsdauer

## Patentansprüche

1. Verfahren zur zentralen Überwachung der Funktion von elektrischen Verbrauchern (3.1, 3.2,...), die durch Versorgungsleitungen L', N' parallel geschaltet sind, wobei - die Versorgungsleitungen L', N' unter Zwischenschaltung einer zentralen Überwachungseinrichtung (1) mit Netzleitungen L, N eines Wechselspannungsnetzes verbunden sind, jedem Verbraucher (3.1, 3.2,...) ein Überwachungsmodul (2) zugeordnet ist, das dafür eingerichtet ist, wenigstens einen Stromimpuls I zu erzeugen der in der zentralen Überwachungseinrichtung (1) als Verbraucher-Zustandsmeldung detektierbar ist und die zentrale Überwachungseinrichtung (1) detektierte Stromimpulse I gespeicherten Verbraucher-Adressen zuordnet, dadurch gekennzeichnet, daß
a) die zentrale Überwachungseinrichtung (1) eine Abfrage der Verbraucherfunktion dadurch startet, daß sie den Strom auf den Versorgungsleitungen L', N' kurzzeitig unterbricht,
b) die Überwachungsmodule (2) der Verbraucher (3.1, 3.2,...) die Spannungsunterbrechung detektieren, einen Funktionstest starten und nach einer verbraucherspezifischen Verzögerungsdauer T_{N1}, T_{N2},... wenigstens einen netzfrequenten Stromimpuls während einer Impulsdauer Tₓ auf den Versorgungsleitungen L', N' auslösen, und
c) die zentrale Überwachungseinrichtung (1) die spezifische Verzögerungsdauer T_{N1}, T_{N2},... als Verbraucheradresse interpretiert und nach Ablauf der jeweiligen Verzögerungsdauer T_{N1}, T_{N2}, ... eintreffende Stromimpulse I dem jeweiligen Verbraucher (3.1, 3.2,...) zuordnet.

2. Verfahren nach Anspruch 1, dadurch gekennzeichnet, daß die in der zentralen Überwachungseinrichtung (1) ermittelten Meldungen gespeichert, und/oder zur Anzeige gebracht und/oder über Datenleitungen zu einer übergeordneten Leitstelle weitergeleitet werden.

3. Verfahren nach Anspruch 1 oder 2, dadurch gekennzeichnet, daß die verbraucherspezifische Verzögerungsdauer T_{N1}, T_{N2},... in Abhängigkeit von einer jeweils in den Überwachungsmodulen (2) eingestellten Adresse gebildet wird.

4. Verfahren nach einem der vorstehenden Ansprüche, dadurch gekennzeichnet, daß die Überwachungsmodule (2) jeweils nur dann und jeweils nur einen Stromimpuls I senden, wenn ein am Verbrauchsort durchgeführter Funktionstest eine Funktionsfähigkeit des jeweiligen Verbrauchers (3.1, 3.2,...) oder außerdem den Einschaltzustand des Verbrauchers (3.1, 3.2,...) ergab.

5. Verfahren nach einem der Ansprüche 1 bis 3, dadurch gekennzeichnet, daß die Meldung der Verbraucher (3.1, 3.2,...) durch mit mehreren Stromimpulsen I codierte Impulspakete erfolgt, so daß mehrere Zustände unterscheidbar sind.

6. Einrichtung zur Durchführung des Verfahrens nach einem der Ansprüche 1 bis 5, dadurch gekennzeichnet,
a) daß in einer Anordnung mit Parallelschaltung mehreren Verbraucher (3.1, 3.2,...) diese über eine zentrale Überwachungseinrichtung (1) mit einem Wechselspannungsnetz verbunden sind, wobei den Verbrauchern (3.1, 3.2,...) jeweils ein Überwachungsmodul (2) zugeordnet ist, das dafür eingerichtet ist, nach einer verbraucherspezifischen Verzögerungsdauer T_{N1}, T_{N2},... wenigstens einen dem Verbraucherstrom überlagerten netzfrequenten Stromimpuls I zu erzeugen, und
b) die zentrale Überwachungseinrichtung (1) dafür eingerichtet ist, durch Stromunterbrechung einen Abfragezyklus auszulösen, Meldestromimpulse zu detektieren und mit der verbraucherspezifischen Verzögerungsdauer T_{N1}, T_{N2},... zu verknüpfen zu einer anzeigbaren Verbraucherzustandsmeldung.
